# EUROPEAN PATENT APPLICATION

(11) **EP 4 390 067 A1**
(43) Date of publication of application: **26.06.2024**
(21) Application number: 22216004.6
(22) Date of filing: 22.12.2022
(51) Int. Cl.: F01N 3/00, F01N 3/28

(54) **FLUID REACTOR DEVICE, METHOD FOR MAINTAINING A FLUID REACTOR DEVICE AND METHOD FOR INSTALLING A FLUID REACTOR DEVICE**

(71) Applicant: MEGTEC Systems AB, 41666 Göteborg (SE)
(72) Inventor: KÄLLSTRAND, Åke, 41656 Göteborg (SE); POULSEN, Martin, 41666 Göteborg (SE)
(74) Representative: 2SPL Patentanwälte PartG mbB

(57) **Abstract**

A fluid reactor device, in particular a fluid purification device, is provided. The fluid reactor device includes a first housing part. The first housing part includes a heat-transfer bed including heat storage material, a first plenum fluidly coupled to a first opening of the heat-transfer bed, and a second plenum fluidly coupled to a second opening of the heat-transfer bed. Additionally, the fluid reactor device includes a second housing part. The second housing part includes an inlet configured to receive fluid, and a fluid distribution system configured to fluidly couple the inlet either to the first plenum or the second plenum. The first housing part and the second housing part are detachably attached to each other.

## Description

### Field

The present disclosure relates to reaction processing of fluids. In particular, examples of the present disclosure relate to a (regenerative) fluid reactor device, in particular to a (regenera**tive)** fluid purification device, a method for maintaining a (regenerative) fluid reactor device and a method for installing a (regenerative) fluid reactor device.

### Background

Conventional systems for fluid reaction processing such as thermal oxidation systems are conventionally built as solitary plants having their components tightly fixed together. Because of this design, various internal components such as gas distribution channels, valve sections or intermediate regions are hard to access or not all accessible. This causes extra efforts for maintenance, plant upgrades, etc.

Hence, there may be a demand for improved reaction processing, in particular purification, of fluids such as exhaust gases.

### Summary

The demand may be satisfied by the subject-matter of the appended claims.

According to a first aspect, the present disclosure provides a (regenerative) fluid reactor device, in particular a (regenerative) fluid purification device. The fluid reactor device comprises a first housing part. The first housing part comprises a heat-transfer bed comprising heat storage material, a first plenum fluidly coupled to a first opening of the heat-transfer bed, and a second plenum fluidly coupled to a second opening of the heat-transfer bed. Additionally, the fluid reactor device comprises a second housing part. The second housing part comprises an inlet configured to receive fluid, and a fluid distribution system configured to fluidly couple the inlet either to the first plenum or the second plenum. The first housing part and the second housing part are detachably attached to each other.

The modular design of the proposed fluid reactor device allows to attach and detach the various housing parts from each other as needed. Accordingly, various tasks such as installation and maintenance of the fluid reactor device may be facilitated. For example, for installation of the fluid reactor device, the housing parts may be provided separately and be attached to each other (e.g., after moving the housing parts into a relative position that allows attachment of the housing parts to each other). For maintenance (e.g., exchange, installation or upgrade) of a component located in one of the housing parts, the housing parts may be detached from each such that the respective inside of the housing parts is accessible for maintenance. Accordingly, the efforts for installation and maintenance may be significantly reduced compared to conventional systems.

According to some examples of the present disclosure, when detached from each other, the first housing part and the second housing part are movable relative to each other. For example, the first housing part and the second housing part may be movable towards each other or may be movable away from each other. For installation of the fluid reactor device, the housing parts may, e.g., be provided separately and be moved towards each other into a relative position that allows attachment of the housing parts to each other. For maintenance, the housing parts may be detached from each and moved away from each other such that a workspace is obtained for a service technician where he can access the respective inside of the housing parts.

For example, one of the first housing part and the second housing part is stationary and the other one of the first housing part and the second housing part is movable. In other words, only one of the first housing part and the second housing part is movable. This may enable a simple design as only one of the housing parts needs to be provided with according means (elements, structures) for moving.

In alternative examples of the present disclosure, both the first housing part and the second housing part are movable. This may provide another degree of freedom for the movement of the housing parts relative to each other. Accordingly, both housing parts may be proved with according means (elements, structures) for moving.

According to some examples of the present disclosure, at least one of the first housing part and the second housing part is provided with bearings (bearing structure(s), bearing means, bearing device(s)) for moving the one of the at least one of the first housing part and the second housing part relative to the ground. By providing one or both housing parts with bearings, movability of the housing parts relative to each other is achieved. The bearings may be manifold. For examples, the bearing may be wheels, rollers, skids or runners. Wheels are simple to install, can carry heavy loads and are simple to maintain. It is to be noted that the wheels may be implemented as needed depending on the ground. For example, the wheels may comprise a respective rim holding a respective tire such that the tire keeps the wheel in contact with the ground. In alternative examples, the wheels may be rail wheels (train wheels) such that the housing parts of the fluid reactor device may be moved relative to each other on railway tracks mounted to/on the ground.

In some examples of the present disclosure, the first housing part comprises a (first) coupling section configured to couple with a coupling section of the second housing part when the first housing part and the second housing part are attached to each other. The coupling sections are dedicated parts of the housing parts for coupling the housing parts to each other. The coupling sections are those parts of the housing parts that interface with each other. The coupling sections may exhibit corresponding shapes such that the coupling sections rest against each other and (substantially) no gaps occur between the coupling sections when the housing parts are attached to each other. Furthermore, the coupling sections may each be provided with one or more corresponding fastening means (elements, structures) that allow to reversibly engage with each other and hold the housing parts together when the housing parts are attached to each other. In particular, the fastening means, while engaged with each other, may allow to press the coupling sections, i.e., the housing parts, against one another such that the coupling section tightly rest against each other and (substantially) no gaps occur between the coupling sections. The fastening means may, e.g., be screw connections, bolt connections, rocker arms, tilt locks (which may be secured by screws or the like), slide fasteners, or combinations thereof. In addition, the coupling sections may comprise one or more corresponding recesses that allow the fluid and/or the reacted fluid to travel from one housing part to the other. For example, a respective recess may be provided in the (first) coupling section of the first housing part for each of the first plenum and the second plenum and two corresponding recesses may be provided in the coupling section of the second housing part such that the first plenum and the second plenum may be fluidly coupled to the fluid distribution system when the housing parts are attached to each other.

According to some examples of the present disclosure, at least one of the (first) coupling section of the first housing part and the coupling section of the second housing part is provided with a respective sealing structure (means, element) for sealing an inside volume of the fluid reactor device against an environment (outside) of the fluid reactor device when the first housing part and the second housing part are attached to each other. Providing a sealing structure on one or both coupling sections may allow to provide a fluid-tight interface such that fluid or reacted fluid from the inside of the fluid reactor device cannot leave the fluid reactor device at the interface of the housing parts to the fluid reactor device's environment, and vice versa. For example, the sealing structure(s) may be made of (comprise) material (e.g., exclusively) that can withstand temperatures in a range from 15 °C to 350 °C. In particular, the sealing structure(s) may be made of (comprise) material (e.g., exclusively) that can withstand temperatures above the acid dew point of sulfuric acid (SO₃), which is approx. 120 °C to 150 °C. The sealing structure(s) may, e.g., be made of (comprise) one or more of Polytetrafluorethylene (PTFE, also known as Teflon^{©}), glass fiber, ceramic cord, and graphite. For example, the sealing structure(s) may be flange seal(s), overlapping seal(s) or combinations thereof. For enabling leakage testing (sealing testing, tightness testing) after attaching of the first and second housing parts, at least one of the first housing part and the second housing part may comprise a respective test fluid port (test fluid inlet) configured to receive a pressurized test fluid and supply the pressurized test fluid to the interior of the fluid reactor device. The pressurized test fluid allows to test whether the interface between the coupling sections, i.e., the interface between the first housing part and the second housing part, is fluid-tight. For example, an overpressure of the test fluid in the interior of the fluid reactor device may be achieved compared to the environment of the fluid reactor device for the leakage measurement. It is to be noted that the injection of the pressurized test fluid to the interior of the fluid reactor device further allows to test the fluid-tightness of the other components (e.g., the housing) of the fluid reactor device. The pressurized test fluid may be a pressurized gas such as pressurized air.

In some examples of the present disclosure, the first housing part comprises a second coupling section for coupling with a third housing part. The first coupling section and the second coupling section are arranged at opposite ends of the first housing part. Furthermore, one or more cover is detachably attached to the second coupling section to (e.g., fluid-tightly) cover one or more recess formed in the second coupling section when the second coupling section is not coupled with the third housing part. The first housing part may be coupled with more than one further housing part on demand. The second coupling section serves an analogous purpose as the first coupling section described above, namely the second coupling section is a dedicated part of the first housing part for coupling the first housing part and the third housing part to each other. Accordingly, the second coupling section may be formed analogously to what is described above for the first coupling section. The one or more recess is formed in the second coupling section to allow the fluid and/or the reacted fluid to travel from one housing part to the other. During times, where the first housing part is only coupled with the second housing part, but not with the third housing part, the one or more recess formed in the second coupling may be covered in order to avoid release of the fluid into the environment, uncontrolled entry of gases or liquids from the environment into the fluid reactor device, heat loses, etc. Therefore, the one or more cover is detachably attached to the second coupling section. When the third housing part is to be coupled to the second coupling section, the one or more cover may simply be removed. For example, the one or more cover may be screwed to the second coupling section to enable detachable attachment to the second coupling section. The one or more cover may comprise a respective sealing structure (means, element) for sealing the inside volume of the fluid reactor device against the environment (outside) of the fluid reactor device when the one or more cover are attached to the second coupling section.

According to some examples of the present disclosure, the fluid reactor device further comprises a third housing part. The third housing part comprises a second inlet configured to receive a second fluid, and a second fluid distribution system configured to fluidly couple the second inlet either to the first plenum or the second plenum. The first housing part and the third housing part are detachably attached to each other. The third housing part allows to concurrently provide the second fluid to the heat-transfer bed. Analogously to what is described above for the detachable attachment of the second housing part to the first housing part, the modular design of the proposed fluid reactor device allows to attach and detach the various housing parts from each other as needed. Accordingly, various tasks such as installation and maintenance of the fluid reactor device may be facilitated. Therefore, efforts for installation and maintenance may be significantly reduced compared to conventional systems.

The second fluid may be different from the fluid. In this case, the second fluid differs from the fluid by at least one of the following properties: composition of the fluid (components contained in the fluid), component concentrations in the fluid, phase of one or more components of the fluid, temperature of the fluid, pressure of the fluid, volume flow of the fluid, etc. By providing separate inlets for the first and the second fluid and providing them separately to the heat-transfer bed, mixing of the first and the second fluid upstream of the fluid reactor device may be avoided. Accordingly, negative effects (e.g., damages) caused by the upstream mixing of the first and the second fluid may be substantially avoided. In other words, reaction processing of two fluids which do not tolerate each other well is enabled by the proposed fluid reactor device. In alternative examples, the fluid may be identical (equal) to the second fluid. By providing two inlets for an identical fluid, an increased input capacity for the fluid may be provided compared to convention systems providing only a single inlet. Accordingly, a pressure bottleneck at the input may be avoided. For example, in a batch process, fluid such as an exhaust gas accrue/are emitted batch-wise and not continuously. By providing two inlets, the fluid reactor device is able to cope with the large quantities of fluid that only occur at particular points in time, but not continuously. In other words, the proposed fluid reactor device may allow to better adopt to varying volumetric flows of a single fluid. For example, a single fluid coming from different sources, but being chemically identical to large extent such as in two industrial processing units doing the same processes and being coupled to a single fluid reactor device for fluid reaction processing such as fluid purification (e.g., thermal exhaust cleaning) may be processed.

The fluid distribution system and the second fluid distribution system may be configured to concurrently and fluidly couple both of the first inlet and the second inlet either to the first plenum or the second plenum. The first and the second fluid distribution system allow to couple one of the first and the second plenum at a time to the first and the second inlet. Accordingly, the first and the second fluid distribution system allow to selectively supply the fluid and the second fluid to the heat-transfer bed via one of the first and the second plenum.

In some examples of the present disclosure, when detached from each other, the first housing part and the third housing part are movable relative to each. For example, the first housing part and the third housing part may be movable towards each other or may be movable away from each other. For installation of the fluid reactor device, the housing parts may, e.g., be provided separately and be moved towards each other into a relative position that allows attachment of the housing parts to each other. For maintenance, the housing parts may be detached from each and moved away from each other such that a workspace is obtained for a service technician where he can access the respective inside of the housing parts. Analogously to what is described above for the first housing part and the second housing part, one of the first housing part and the third housing part may be stationary and the other one of the first housing part and the third housing part may be movable. Alternatively, both the first housing part and the third housing part may be movable. At least one of the first housing part and the second housing part may be provided with bearings such as wheels, rollers, skids or runners for moving the one of the at least one of the first housing part and the third housing part relative to the ground - analogously to what is described above for the first housing part and the second housing part.

According to some examples of the present disclosure, the first housing part comprises a second coupling section configured to be coupled with a contact section of the third housing part when the first housing part and the second housing part are attached to each other. The coupling sections are dedicated parts of the housing parts for coupling the housing parts to each other. The coupling sections may exhibit corresponding shapes such that the coupling section rest against each other and (substantially) no gaps occur between the coupling sections when the housing parts are attached to each other. Furthermore, the coupling sections may each be provided with one or more corresponding fastening means (elements, structures) that allow to reversibly engage with each other and hold the housing parts together when the housing parts are attached to each other. In particular, the fastening means, while engaged with each other, may allow to press the coupling sections, i.e., the housing parts, against one another such that the coupling section tightly rest against each other and (substantially) no gaps occur between the coupling sections. In addition, the coupling sections may comprise one or more corresponding recesses that allow the fluid and/or the reacted fluid to travel from one housing part to the other. For example, a respective recess may be provided in the second coupling section of the first housing part for each of the first plenum and the second plenum and two corresponding recesses may be provided in the coupling section of the second housing part such that the first plenum and the second plenum may be fluidly coupled to the second fluid distribution system when the housing parts are attached to each other.

In some examples of the present disclosure, at least one of the second coupling section of the first housing part and the coupling section of the second housing part is provided with a respective sealing structure for sealing an inside volume of the fluid reactor device against an environment of the fluid reactor device when the first housing part and the third housing part are attached to each other. Providing a sealing structure on one or both coupling sections may allow to provide fluid-tight interface such that fluid or reacted fluid from the inside of the fluid reactor device cannot leave the fluid reactor device at the interface of the housing parts to the fluid reactor device's environment, and vice versa. The sealing structure(s) may be as described above for the sealing structure(s) of the first coupling section of the first housing part and/or the coupling section of the second housing part. Analogously to what is described above, at least one of the first housing part and the third housing part may comprise a respective test fluid port (test fluid inlet) configured to receive a pressurized test fluid and supply the pressurized test fluid to the interior of the fluid reactor device. Accordingly, leakage testing (sealing testing, tightness testing) after attaching of the first and third housing parts is enabled.

According to some examples of the present disclosure, the second housing part comprises an outlet for releasing the reacted fluid. Furthermore, the fluid distribution system is configured to fluidly couple the outlet to the one of the first plenum and the second plenum which is not fluidly coupled to the inlet. That is, the fluid distribution system not only manages the distribution of the fluid to the first plenum and the second plenum, but also manages the drainage of the reacted fluid from the fluid reactor device. Analogously, the third housing part may comprise a second outlet for releasing the reacted fluid. The second fluid distribution system may accordingly be configured to fluidly couple the second outlet to the one of the first plenum and the second plenum which is not fluidly coupled to the second inlet.

In some examples of the present disclosure, the fluid reactor device further comprises a first contact structure (element, material, device, means) for contacting the fluid. The first contact structure is arranged in the fluid distribution system and configured to heat the fluid before it reaches the first plenum and/or the second plenum. Alternatively or additionally, the first contact structure may be arranged in the first plenum and configured to heat the fluid before it reaches the heat-transfer bed. By (pre-)heating the fluid to the predetermined temperature before the fluid reaches the heat storage material or before the fluid enters the first plenum, various effects such as pollution of fluid flow paths within the fluid reactor device, blocking of reaction surfaces within the fluid reactor device and corrosive wear of components of the fluid reactor device may be avoided. As corrosive wear may be avoided by heating the fluid to the predetermined temperature, components of the fluid reactor device which might come into contact with the fluid need not be corrosion resistant. As these components need not be corrosion resistant, less expensive materials may be used compared to conventional systems. Furthermore, as pollution of fluid flow paths and blocking of reaction surfaces may be avoided by heating the fluid to the predetermined temperature, no time-consuming countermeasures are required. Accordingly, downtimes of the fluid reactor device may be reduced compared to conventional systems. For example, the predetermined temperature may be (well) above the highest dew point (temperature) of the fluid's components or at least (well) above the highest dew point of the fluid's components being critical for corrosive wear or the like. Heating the fluid being supplied to the heat-transfer bed to a temperature above the highest dew point of the fluid's components may allow to ensure that the fluid's components do not condense out of the gaseous phase. In other words, heating the fluid being supplied to the heat-transfer bed to a temperature above the highest dew point of the fluid's components may allow to ensure that the fluid substantially only contains gaseous components. Accordingly, pollution of fluid flow paths and blocking of reaction surfaces within the fluid reactor device as well as corrosive wear of components of the fluid reactor device may be avoided.

According to some examples of the present disclosure, the first contact structure is configured to heat the fluid using one or more of heat from the heat-transfer bed, heat recovered from reacted fluid previously drained from the heat-transfer bed via the first plenum, and heat recovered from reacted fluid being concurrently drained from the heat-transfer bed via the second plenum. When the fluid reacts while flowing through the heat storage material, excess heat is generated and stored by the heat storage material. Using the excess heat stored by the heat storage material may allow to at least reduce the amount of heat or energy from external sources required for heating the fluid being supplied to the heat-transfer bed. In some examples, no heat or energy from external sources may be required for heating the fluid being supplied to the heat-transfer bed. In other words, the first contact structure may be configured to heat the fluid being supplied to the heat-transfer bed using exclusively (only) heat from the heat storage material. Using heat from the heat storage material for heating the fluid being supplied to the heat-transfer bed may allow to increase an energy efficiency of the fluid reactor device and, hence, allow to reduce an overall energy consumption of the fluid reactor device. Alternatively or additionally, the first contact structure may provide regenerative heating using heat recovered from the reacted fluid, which is drained from the heat-transfer bed. As described above, the first contact structure may be configured to heat the fluid being supplied to the heat-transfer bed using/with heat recovered from reacted fluid previously drained from the heat-transfer bed via the first plenum. In alternative or additional examples, the heater may be configured to heat the fluid being supplied to the heat-transfer bed using/with heat recovered from reacted fluid being concurrently (at the same time, in parallel) drained from the heat-transfer bed via the second plenum. The reacted fluid is still hot when it is drained form the heat-transfer bed. Recovering and using the heat of the reacted fluid for subsequently or concurrently heating the fluid may allow to further increase the efficiency of the fluid reactor device. To heat the fluid being supplied to the heat-transfer bed with heat energy from reacted fluid, the first contact structure may, e.g., comprise heat-storage material such as a heat-storage block (e.g. a ceramic heat-storage block or honeycomb block) to recover the heat from the reacted fluid and optionally release the heat to the fluid. In other examples, the heat recovered by the heat-storage material may be transferred to the fluid being supplied to the heat-transfer bed.

In some examples of the present disclosure, the fluid reactor device further comprises at least one of a heat exchanger, a heat pipe, a heat conductor (such as a thermal oil circuit) and a heat pump configured to controllably transfer heat from the heat storage material and/or heat recovered from the reacted fluid being concurrently drained from the heat-transfer bed via the second plenum to the first contact structure. The at least one of the heat exchanger, the heat pipe, the heat conductor and the heat pump may in particular be configured to transfer heat from an inner zone or area of the heat-transfer bed or from an area next to a reaction zone within the heat-transfer bed to the first contact structure. Alternatively or additionally, the at least one of the heat exchanger, the heat pipe, the heat conductor and the heat pump is configured to controllably transfer heat recovered from the reacted fluid to the first contact structure. Heat exchangers, heat pipes as well as heat conductors allow to transfer heat from the heat storage material and/or the heat recovered from the reacted fluid to the fluid being supplied to the heat-transfer bed with high efficiency and in a controllable manner. Accordingly, heat exchangers, heat pipes as well as heat conductors allow to controllably heat the fluid being supplied to the heat-transfer bed with heat from the heat-transfer bed or recovered heat from the reacted fluid. For example, the heat exchanger may be one of a gas-gas heat exchanger and a gas-fluid-gas heat exchanger. The heat from the heat-transfer bed or the recovered heat from the reacted fluid may also be used as input to a heat pump such that the heat pump can transfer ("pump") the given heat to the fluid being supplied to the heat-transfer bed. The transfer of the heat only requires little work and, hence, little external energy input. For example, the input external energy may be electricity from renewable sources.

According to some examples of the present disclosure, the fluid reactor device further comprises a second contact structure for contacting the fluid. The second contact structure is arranged in the fluid distribution system and configured to heat the fluid before it reaches the second plenum. Alternatively or additionally, the first contact structure may be arranged in the second plenum and configured to heat the fluid before it reaches the heat-transfer bed. By means of the second contact structure, the fluid being supplied to the heat-transfer bed may be selectively heated in a controllable manner during time periods in which the second plenum is configured to supply the fluid to the heat-transfer bed.

The fluid reactor device may optionally comprise control circuitry configured to control the amount of heat transferred by the respective one of first contact structure and the second contact structure to the fluid. By controlling the amount of heat transferred to the fluid, the temperature of the fluid can be controlled dynamically to the predetermined temperature. Furthermore, the control circuitry may allow to control the amount of heat transferred to the fluid and, hence, the temperature of the fluid based on various parameters such as a composition of the fluid, a temperature of the fluid before heating, a temperature of the fluid after heating and/or a volume flow rate of the fluid. The fluid reactor device may further comprise a respective senor configured to measure a composition of the fluid, a temperature of the fluid before heating (i.e., before passing the respective contact structure), a temperature of the fluid after heating (i.e., after passing the respective contact structure), and a volume flow rate of the fluid. The control circuitry may accordingly be configured to control the amount of heat transferred by the respective contact structure to the fluid based on measurement data of the respective sensor. Controlling the amount of heat transferred by the respective contact structure to the fluid based on the measured quantity may allow to adjust the transferred amount of heat more precisely such that the temperature of the fluid after passing the respective contact structure is (substantially) the predefined temperature.

Analogously to what is described above, one or more contact structure may be arranged in the second fluid distribution system and configured to heat the second fluid before it reaches the respective plenum, or one or more contact structure may be arranged in the first plenum and/or the second plenum and be configured to heat the second fluid before it reaches the heat-transfer bed.

In some examples of the present disclosure, the first plenum and the second plenum are configured to alternatingly supply the fluid to the heat-transfer bed such that the fluid heats up and reacts while flowing through the heat storage material. During a time period in which one of the first plenum and the second plenum is configured to supply the fluid to the heat-transfer bed, the other one of the first plenum and the second plenum is configured to drain the reacted fluid from the heat-transfer bed. The periodic reversion of the flow direction of the fluid through the heat storage material may allow to maintain a high heat exchange efficiency of the heat storage material (e.g., higher than 95 %). Accordingly, the fluid reactor device may recover substantially all the heat needed for sustaining a needed reaction temperature in the heat-transfer bed (e.g., an oxidation temperature or a reduction temperature). Accordingly, the fluid reactor device may be understood as a regenerative fluid reactor device.

According to some examples of the present disclosure, the fluid reactor device further comprises an electrical heater configured to heat the heat storage material to a predefined temperature suitable for thermal reaction of the fluid. The electrical heater may allow to initially heat the heat storage material to the predefined temperature. At least part of the electrical heater may be arranged in the heat-transfer bed such that the heat storage material surrounds at least part of the electrical heater. In other words, at least part of the electrical heater may be embedded in the heat storage material.

In some examples of the present disclosure, one or more hollow body are arranged in the heat storage material. At least part of the electrical heater is removably arranged in the one or more hollow body. The inner volume (i.e., the inside) of the one or more hollow body is accessible from the outside of the heat-transfer bed (e.g., via at least one corresponding opening in the respective hollow body). For example, one or more (e.g., closable or sealable) service opening may be formed in a wall of the heat-transfer bed surrounding the heat storage material (i.e., the one or more service opening are formed in the first housing part) and be connected (coupled) to the one or more hollow body such that the inner volume of the one or more hollow body is accessible via the one or more service opening. At least part of the one or more hollow body may, e.g., be one or more tube placed in bulk heat storage material. Alternatively, recesses in at least part of the block shaped heat storage material may form at least part of the one or more hollow body. Optionally, one or more tube may be arranged in at least part of the recesses forming the one or more hollow body to further protect the electrical heater. At least part of the electrical heater is removably arranged in the one or more hollow body. Arranging at least part of the electrical heater removably in the one or more hollow body may allow to easily access and/or remove the electrical heater from the fluid reactor device for inspection, maintenance, etc. In particular, arranging at least part of the electrical heater in the one or more hollow body may allow to access and/or remove the electrical heater without removing heat storage material from the heat-transfer bed. This not only may simplify inspection, maintenance, etc. of the electrical heater, but also reduce downtimes of the fluid reactor device since heat storage material need not be removed from the heat-transfer bed. Furthermore, arranging at least part of the electrical heater in the one or more hollow body may allow to facilitate the installation of the electrical heater.

According to some examples of the present disclosure, the heat-transfer bed comprises a thermally insulating wall surrounding the heat storage material and extending between the first plenum and the second plenum. In these examples, the first opening and the second opening are formed in the thermally insulating wall. The thermally insulating wall may allow to minimize heat losses over the heat-transfer bed.

In some examples of the present disclosure, part of the first housing part is forming a housing of the first plenum. The housing of the first plenum is at least partly formed of and/or is at least partly covered by a heat-insulating material (e.g. part of the first housing part may at least partly be formed of heat-insulating material). The heat-insulating material may allow to minimize heat loses over the housing of the first plenum. Analogously, part of the first housing part is forming a housing of the second plenum. The housing of the second plenum may be at least partly formed of and/or may be at least partly covered by a heat-insulating material to minimize heat loses over the housing of the second plenum (e.g. part of the second housing part may at least partly be formed of heat-insulating material).

According to some examples of the present disclosure, catalyst material for lowering a reaction temperature of fluid is arranged within the heat-transfer bed. Due to the catalyst material, the needed temperature for the reaction of the fluid may be lowered such that the fluid reactor device may operate at lower temperatures.

According to a second aspect, the present disclosure provides a method for maintaining a fluid reactor device as described above. The method comprises detaching the first housing part and the second housing part from each other. Additionally, the method comprise moving the first housing part and the second housing part away from each after detaching to enable access to the inside of at least one of the first housing part and the second housing part for maintenance. The method further comprises moving the first housing part and the second housing part towards each other after maintenance. In addition, the method comprises attaching the first housing part to the second housing part after the first housing part and the second housing part are moved towards each other.

The method allows to separate the housing parts of the modular fluid reactor device for maintenance such that the respective inside of the housing parts is accessible for a service technician. Furthermore, by moving the housing parts away from each other, a workspace is obtained for the service technician. Accordingly, the service technician can easily access objects within the respective housing part and perform required or desired maintenance work. In other words, the efforts for maintenance of the fluid reactor device may be significantly reduced compared to conventional systems.

For example, the method may further comprise performing maintenance work on at least one component (element, structure) in the first housing part. Additionally or alternatively, the method may comprise performing maintenance work on at least one component (element, structure) in the second housing part. Similarly, the method may comprise performing maintenance work on at least one component (element, structure) in another detachably attached housing part of the fluid reactor device. The maintenance work may be manifold. For example, the maintenance work may comprise exchanging, installing, uninstalling, upgrading and/or purifying (cleaning) one or more components in at least one of the housing parts.

According to a third aspect, the present disclosure provides a method for installing a fluid reactor device as described above. The method comprises providing the first housing part and the second housing part separate from each other. Additionally, the method comprises moving the first housing part and the second housing part towards each other. The method further comprises attaching the first housing part to the second housing part after the first housing part and the second housing part are moved towards each other.

The method allows facilitated installation of the fluid reactor device. As the fluid reactor device is modular, the individual housing parts may be shipped separately from a manufacturer or vendor to an installation location. As the individual housing parts are smaller than the overall fluid reactor device, shipping is facilitated. Furthermore, handling is facilitated due to the smaller individual housing parts. The separate housing parts only need to be moved towards each other into a relative position that allows attachment of the housing parts to each other. Subsequently they can be attached to each other. Furthermore, before the first housing part and the second housing part are moved towards each other, a service technician easily access objects within the respective housing part and perform required or desired installation work. Accordingly, the efforts for installation of the fluid reactor device. may be significantly reduced compared to conventional systems.

In some examples, the method for maintaining the fluid reactor device or the method for installing the fluid reactor device further comprises performing a leakage test (sealing test, tightness test) after attaching the first housing part to the second housing part. The leakage test allows to test whether the interface between the first housing part and the second housing part is fluid-tight. The leakage test may, e.g., comprise injecting a pressurized test fluid to the interior of the fluid reactor device (e.g., via a respective test fluid port in at least one of the first housing part, the second housing and the third housing part as described above), and measuring whether the test fluid leaks from the interface between the first housing part and the second housing part. Analogously, it may be tested whether the test fluid leaks from the interface between the first housing part and the third housing part. It is to be noted that the injection of the pressurized test fluid to the interior of the fluid reactor device further allows to test the fluid-tightness of the other components (e.g., the housing) of the fluid reactor device. As described above, the pressurized test fluid may be a pressurized gas such as pressurized air.

### Brief description of the Figures

Some examples of apparatuses and/or methods will be described in the following by way of example only, and with reference to the accompanying figures, in which
Fig. 1 illustrates a sectional view of a first example of a fluid reactor device;
Fig. 2 illustrates a perspective view of a second example of a fluid reactor device;
Fig. 3 illustrates a sectional view of a third example of a fluid reactor device;
Fig. 4 illustrates a sectional view of a fourth example of a fluid reactor device;
Fig. 5 illustrates a sectional view of a fifth example of a fluid reactor device;
Fig. 6 illustrates a sectional view of a sixth example of a fluid reactor device;
Fig. 7 illustrates a sectional view of a seventh example of a fluid reactor device;
Fig. 8 illustrates a flowchart of an example of a method for maintaining a fluid reactor device as described herein; and
Fig. 9 illustrates a flowchart of an example of a method for installing a fluid reactor device as described herein.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

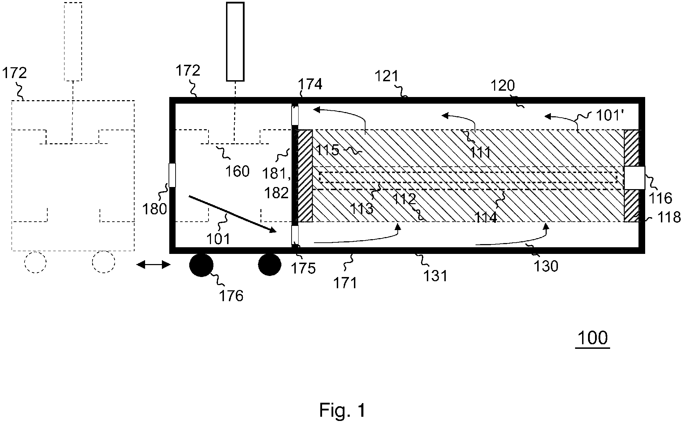

Fig. 1 schematically illustrates a fluid reactor device 100 for causing a fluid 101 to react. The fluid reactor device 100 causes at least part of the fluid 101 to react such that a reacted fluid 101' (i.e., the fluid after undergoing the reaction) is obtained.

The fluid 101 may be or comprise one or more gaseous components (substances, ingredients), one or more vapor components (substances, ingredients), one or more liquid components (substances, ingredients), and/or mixtures thereof. According to examples of the present disclosure, the fluid 101 may comprise exclusively gaseous components or substances. For example, the fluid 101 may be an exhaust gas or an exhaust air, wherein an exhaust air contains a higher proportion of oxygen compared to an exhaust gas.

The type of reaction is not limited. In particular, the fluid reactor device 100 may be a fluid purification device for purifying the fluid 101. In case the fluid reactor device 100 is a fluid purification device, the fluid purification device removes one or more ingredient or reactant from the fluid 101 by reaction processing for purifying the fluid. The one or more ingredient or reactant may be understood as one or more impurity and/or one or more pollutant. An impurity may be understood in this context as a substance (ingredient, reactant) in the fluid 101 that is not included in a desired (target) composition of the fluid 101. A pollutant may be understood in this context as a substance (ingredient, reactant) that harms systems, animals, humans and/or the environment when occurring in a specific quantity or concentration (e.g., defined as mass of the pollutant per unit volume of the fluid 101 or as number of pollutant particles per unit volume of the fluid 101). One or more impurity or pollutant contained in the fluid 101 may be combustible. In other words, the fluid 101 may comprises one or more combustible ingredient or reactant. For example, organic and/or inorganic impurities or pollutants may be removed from the fluid 101 by the fluid purification device. The organic and/or inorganic impurities or pollutants may, e.g., be Volatile Organic Compounds (VOCs), solvents, nitrogen oxides (NOₓ), methane (CH₄), sulfur oxides (SOₓ), hydrogen fluoride (HF), ammonia (NH₃), hydrogen chloride (HCl), dioxins, furans or pollutants of the basic structure CₓH_{y}O_{z} (C denotes carbon; H denotes hydrogen; O denotes oxygen; x, y, and z are natural numbers).

The fluid reactor device 100 comprises a first housing part 171 and a second housing part 172. The first housing part 171 and the second housing part 172 together form a modular housing of the fluid reactor device 100. In particular, the housing formed by the first housing part 171 and the second housing part 172 encloses a volume in which the various components of the fluid reactor device 100 for reaction processing of the fluid 101 are accommodated.

The first housing part 171 and the second housing part 172 are detachably attached to each other. Both housing parts 171 and 172 comprise a respective coupling section 181, 182. The coupling sections 181 and 182 are dedicated sections of the housing parts 171 and 172 that interface with each other when the first housing part 171 and the second housing part 172 are attached to each other. The coupling sections 181 and 182 may, e.g., exhibit corresponding shapes such that the coupling section 181 and 182 rest against each other and (substantially) no gaps occur between the coupling sections 181 and 182 when the housing parts 171 and 172 are attached to each other. Furthermore, the coupling sections 181 and 182 may each be provided with one or more corresponding fastening means (elements, structures) that allow to reversibly engage with each other and hold the housing parts 171 and 172 together when the housing parts 171 and 172 are attached to each other. In particular, the fastening means, while engaged with each other, may allow to press the coupling sections 181 and 182 against one another such that the coupling section 181 and 182 tightly rest against each other and (substantially) no gaps occur between the coupling sections 181 and 182. At least one of the coupling section 181 and the coupling section 182 is provided with a respective sealing structure (not illustrated in Fig. 1) for sealing the inside volume of the fluid reactor device 100 against an environment (outside) of the fluid reactor device 100 when the first housing part 171 and the second housing part 172 are attached to each other. Accordingly, a fluid-tight interface may be provided such that the fluid 101 or the reacted fluid 101' from the inside of the fluid reactor device 100 cannot leave the fluid reactor device 100 at the interface of the housing parts 171 and 172 to the fluid reactor device 100's environment, and vice versa.

As indicated in Fig.l, when detached from each other, the first housing part 171 and the second housing part 172 are movable relative to each other. In particular, the first housing part 171 is stationary (i.e., not movable relative to the ground) and the second housing part 172 is movable (relative to the ground and, hence, the first housing part 171). The second housing part 172 is provided with wheels 176 for moving the second housing part 172 relative to the ground. However, it is to be noted that the present disclosure is not limited thereto. In other examples, the second housing part 172 may be stationary and the first housing part 171 may be movable. In alternative examples, both the first housing part 171 and the second housing part 172 may be movable. It is to be further noted that other bearings such as rollers, skids or runners may be used instead of the wheels 176.

The first housing part 171 comprises a (e.g., single, i.e., exactly/only one) heat-transfer bed 110. The heat-transfer bed 110 comprises (e.g., is filled with) heat storage material (heat transfer material) 115. The heat storage material 115 is material capable of storing and releasing heat. The heat storage material exhibits a certain (predefined) specific heat capacity and preferably a certain (predefined) heat transfer and/or transmission coefficient. For example, the heat storage material 115 may comprise or be ceramic material such as alumina porcelain, mullite, fireclay (chamotte), cordierite, zircon or a mixture thereof. However, the present disclosure is not limited thereto. Other types of ceramic material may be used as well. In some examples, the heat storage material 115 may alternatively or additionally comprise or be concrete, stone, rock, metallic material or a mixture thereof. The heat storage material 115 may be packed structured or randomly in the heat-transfer bed 110 to form regular or irregular patterns (e.g., ceramic honeycombs, ceramic saddles or the like may be used). For example, the heat storage material 115 may comprise (e.g., exclusively) block shaped heat storage material, (e.g., exclusively) bulk heat storage material or combinations thereof.

The heat-transfer bed 110 comprises a thermally insulating wall 118 surrounding the heat storage material 115. A first opening 111 and a second opening 112 are formed in the thermally insulating wall 118. The first housing part 171 additionally comprises a first plenum 120 and a second plenum 130. The first plenum 120 is attached to the first opening 111 of the heat-transfer bed 110, and the second plenum 130 is attached to the second opening 112 of the heat-transfer bed 110. The first opening 111 and the second opening 112 are arranged on opposite sides of the heat-transfer bed 110 such that the thermally insulating wall 118 extends between the first plenum 120 and the second plenum 130. In other examples, at least one of the first plenum 120 and the second plenum 130 need not be directly attached to the first and second openings 111 and 112. For example, one or more intermediate elements or a (temporary) bypass may be coupled between at least one of the first plenum 120 and the second plenum 130 and the first and second openings 111 and 112. In general, the first plenum 120 is fluidly coupled to the first opening 111, and the second plenum 130 is fluidly coupled to the second opening 112.

The first plenum 120 and the second plenum 130 are configured to alternatingly supply the fluid 101 to the heat-transfer bed 110 such that the fluid 101 heats up and reacts while flowing through the heat storage material 115. It is to be noted that all components of the fluid 101 or only part of the components of the fluid 101 may react. In other words, at least one component of the fluid 101 reacts while flowing through the heat storage material 115. That is, the fluid 101 may comprise one or more reactive component which reacts while flowing through the heat storage material 115 and one or more non-reactive component which does not react while flowing through the heat storage material 115. For example, the fluid 101 may be heated up and be subject to an oxidation process or a reduction process while flowing through the heat storage material 115. The fluid 101 may, e.g., comprise an exhaust air being a mixture of air (or a near air-like gas mixture) and at least one combustible (such as a VOC or the like). In this example, the VOC reacts with the air's oxygen while flowing through the heat storage material 115, whereas other components of the fluid 101 do not take part in the reaction. The heat storage material 115 is configured to store heat released by the fluid 101 during and/or after the reaction. For example, the reaction may take place in an inner (central) zone or area of the heat storage material 115/heat-transfer bed 110. The inner zone or area may be understood as a reaction zone or area within the heat-transfer bed. The inner zone or area is located at or near a center plane of the heat-transfer bed and/or may oscillate around center plane of the heat-transfer bed.

During a time period in which one of the first plenum 120 and the second plenum 130 is configured to supply the fluid 101 to the heat-transfer bed 110, the other one of the first plenum 120 and the second plenum 130 is configured to drain the reacted fluid 101' (i.e., the fluid after undergoing the reaction) from the heat-transfer bed 110. Accordingly, a flow direction of the fluid 101 through the heat storage material 115 is periodically reversed (e.g., every 90 to 120 seconds).

Fig. 1 illustrates the fluid reactor device 200 during a time period in which the second plenum 130 is configured to supply the fluid 101 to the heat-transfer bed 110 and the first plenum 120 is configured to drain the reacted fluid 101' from the heat-transfer bed 110. Accordingly, the fluid 101 flows from the bottom to the top of the heat-transfer bed 110 through the heat storage material 115. Heat energy previously stored in the bottom part of the heat storage material 115 is used to heat up the fluid 101 and causes the fluid 101 to react. The heat storage material 115 at the top part recovers the heat energy from the reacted fluid 101'. For example, as the fluid 101 passes from the bottom part to the top part of the heat storage material 115, VOCs in the fluid 101 may get hot enough to undergo thermal oxidation to water vapor and carbon dioxide.

During a time period in which the first plenum 120 is configured to supply the fluid 101 to the heat-transfer bed 110, the fluid flow is reversed. That is, while the first plenum 120 is configured to supply the fluid 101 to the heat-transfer bed 110, the second plenum 130 is configured to drain the reacted fluid 101' from the heat-transfer bed 110. Accordingly, the fluid 101 flows from the top to the bottom of the heat-transfer bed 110 through the heat storage material 115. Heat energy previously stored in the top part of the heat storage material 115 is used to heat up the fluid 101 and causes the fluid 101 to react. The heat storage material 115 at the bottom part recovers the excess heat energy from the reacted fluid 101'.

The periodic reversion of the flow direction of the fluid 101 through the heat storage material 115 may allow to maintain a high heat exchange efficiency of the heat storage material 115 (e.g., higher than 95 %). Accordingly, the fluid reactor device 100 may recover substantially all the heat needed for sustaining a needed reaction temperature in the heat-transfer bed 110 (e.g., an oxidation temperature or a reduction temperature). Accordingly, the fluid reactor device 100 may be understood as a regenerative fluid reactor device. For example, irrespective of the flow direction of the fluid 101 through the heat storage material 115, a temperature of the reacted fluid 101' may be less than 100 °C higher than that of the fluid 101 supplied to the heat-transfer bed 110 (e.g., the temperature may be only 20 °C to 50 °C higher). Further, the periodic reversion of the flow direction of the fluid 101 may allow to maintain a predetermined temperature profile of the heat-transfer bed 110 along the extension of the heat-transfer bed 110 between the first plenum 110 and the second plenum 120 (i.e., along the vertical extension of the heat-transfer bed in the example of Fig. 1). In particular, the periodic reversion of the flow direction of the fluid 101 may allow to keep the hottest zone near a center plane of the heat-transfer bed 110 along the extension of the heat-transfer bed 110 between the first plenum 110 and the second plenum 120. In other words, the hottest zone may substantially be the inner zone or area of the heat storage material 115/heat-transfer bed 110.

During operation of the fluid reactor device 100, the heat storage material 115 may exhibit a predefined temperature suitable for thermal reaction of the fluid 101. For example, the predefined temperature may be more than approx. 600 °C, 800 °C or 1000 °C. The fluid reactor device 200 may according to some examples of the present disclosure comprise an electrical heater 113 configured to heat the heat storage material 115 to the predefined temperature. It is to be noted that the electrical heater 113 is not mandatory. For example, the electrical heater 113 may be one of the following: an electro-resistive heater (e.g., grid of electrical coils arranged in the heat storage material 115), an electro-magnetic heater (inductive heater), or an electrically driven radiation heater (e.g. an infrared, IR, emitter). The electrical heater 113 may, e.g., be used to initially heat the heat storage material 115 to the predefined temperature (e.g., after start-up of the fluid reactor device 100). In the example of Fig. 1, one electrical heater 113 is arranged in the center region of the heat-transfer bed 110 and extends perpendicular to the extension of the heat-transfer bed 110 between the first plenum 110 and the second plenum 120. However, it is to be noted that the present disclosure is not limited thereto. The arrangement as well as the extension of the electrical heater 113 may be different from what is shown in Fig. 1.

Furthermore, it is to be noted that the electrical heater 113 need not be arranged directly in the heat storage material 115. Optionally, one or more hollow body such as the hollow body 114 may be arranged in the heat storage material 115. The inner volume (i.e., the inside) of the one or more hollow body is accessible from the outside of the heat-transfer bed 110. For example, one or more (e.g., closable or sealable) service opening such as the service opening 116 may be formed in thermally insulating wall 118 as well the first housing part 171 and be connected (coupled) to the one or more hollow body such that the inner volume of the one or more hollow body is accessible via the one or more service opening. At least part of the electrical heater 113 (e.g., its electrical coils) is removably arranged in the one or more hollow body. Arranging at least part of the electrical heater removably in the one or more hollow body may allow to easily access and/or remove the electrical heater 113 from the fluid reactor device 100 for inspection, maintenance, etc. In particular, arranging at least part of the electrical heater in the one or more hollow body may allow to access and/or remove the electrical heater 113 without removing heat storage material 115 from the heat-transfer bed 110. This not only may simplify inspection, maintenance, etc. of the electrical heater 113, but also reduce downtimes of the fluid reactor device 100 since heat storage material 115 need not be removed from the heat-transfer bed 110. Furthermore, installation of the electrical heater 113 may be facilitated.

The one or more hollow body exhibits a certain (predefined) specific heat capacity and preferably a certain (predefined) heat transfer and/or transmission coefficient, which should be high and/or may be similar to the ones of the heat storage material 115, to enable efficient heat transport from the electrical heater 113 to the heat storage material 115 surrounding the one or more hollow body. For example, the one or more hollow body may comprise or be ceramic material such as alumina porcelain, mullite, fireclay (chamotte), cordierite, zircon or a mixture thereof. However, the present disclosure is not limited thereto. Other types of material may be used as well (e.g., concrete, stone, rock, metallic material or a mixture thereof).

According to some examples of the present disclosure, catalyst material for lowering a reaction temperature of the fluid 101 may be arranged within the heat-transfer bed 110. Accordingly, the needed temperature for the reaction of the fluid 101 (e.g., oxidation or rection) may be lower such that the fluid reactor device 100 may operate at lower temperatures. For example, one or more layer of catalyst material may be provided separate from the heat storage material 115. One or more layer of catalyst material may, e.g., be attached to one or both ends of the heat-transfer bed 110 along the (possible) flow directions of the fluid (e.g., near the first opening 111 and the second opening 112). Alternatively or additionally, the heat storage material 115 in the heat-transfer bed 110 (e.g., cordierite) may at least in part be coated with and/or comprise (contain) catalyst material or catalytically active components. Further alternatively or additionally, catalyst material may be admixed to the heat storage material 115 in the heat-transfer bed 110. Still further alternatively or additionally, a first part of the heat storage material 115 in the heat-transfer bed 110 may be coated with and/or comprise (contain) catalyst material or catalytically active components, whereas a second part of the heat storage material 115 in the heat-transfer bed 110 does not comprise catalyst material and catalytically active components. The first part and the second part of the heat storage material 115 may be admixed or be provided as different layers in the heat-transfer bed 110. For example, one or more oxidation catalysts and/or one or more reduction catalysts may be used. However, the present disclosure is not limited thereto. Also other types of catalysts may be used.

In case the fluid reactor device 100 is a fluid purification device, the fluid purification device may, e.g., purify the fluid 101 by Regenerative Thermal Oxidation (RTO). In other examples of the present disclosure, the fluid purification device may purify the fluid 101 by Regenerative Catalytic Oxidation (RCO). For example, the fluid purification device may be configured to purify the fluid 101 by flameless RTO or flameless RCO. However, the present disclosure is not limited thereto. Also other reactions of the fluid 101 such as a reduction of the fluid 101 may be used.

Each of the first plenum 120 and the second plenum 130 comprises a respective housing 121, 131 attached to the heat-transfer bed 110 such that the respective volume enclosed by the respective housing 121, 131 forms a respective plenum space for alternatingly transporting the fluid 101 towards and transporting the reacted fluid 101' away from the heat-transfer bed 110. As can be seen from Fig. 1, part of the first housing part 171 is forming the housing 121 of the first plenum 120, another part of the first housing part 171 is forming the housing 131 of the second plenum 130. The housing 121 of the first plenum 120 may according to examples of the present disclosure at least partly be formed of and/or be at least partly covered by a heat-insulating material to minimize heat loses over the housing 121 of the first plenum 120. Analogously, the housing 131 of the second plenum 130 may according to examples of the present disclosure at least partly be formed of and/or be at least partly covered by a heat-insulating material to minimize heat loses over the housing 131 of the second plenum 130. That is, one or more part of the first housing part 171 may at least partly be formed of heat-insulating material.

The second housing part 172 comprises an inlet 180 configured to receive the fluid 101. For example, the inlet 180 may be fluidly coupled or couplable to a source providing/emitting the fluid 101 (e.g., a device such as a machine or a production facility emitting the fluid 101). Furthermore, the second housing part 172 comprises a fluid distribution system 160 fluidly coupled to the inlet 180. As illustrated in Fig. 1, the fluid distribution system 160 is fluidly coupled between the inlet 180 and each of the first plenum 110 and the second plenum 120 when the second housing part 172 is attached to the first housing part 171. Recesses 174 are provided in the coupling sections 181 and 182 such that the first plenum 120 is fluidly coupled to the fluid distribution system 160 when the housing parts 171 and 172 are attached to each other. Furthermore, recesses 175 are provided in the coupling sections 181 and 182 such that the second plenum 130 is fluidly coupled to the fluid distribution system 160 when the housing parts 171 and 172 are attached to each other. The fluid distribution system 160 is configured to fluidly couple the inlet 180 either to the first plenum 120 or the second plenum 130. For example, during the time period in which the first plenum 120 is configured to supply the fluid 101 to the heat-transfer bed 110, the fluid distribution system 160 is configured to fluidly couple the inlet 180 to the first plenum 120 (and not to the second plenum 130) such that the fluid 101 (e.g., exclusively, only) flows through the first plenum 120 to the heat-transfer bed 110. Analogously, during the time period in which the second plenum 130 is configured to supply the fluid 101 to the heat-transfer bed 110, the fluid distribution system 160 is configured to fluidly couple the inlet 180 to the second plenum 130 (and not to the first plenum 120) such that the fluid (e.g., exclusively, only) flows through second plenum 130 to the heat-transfer bed 110. The fluid distribution system 160 may, e.g., comprise two valves for providing the above described functionality. The second housing part 171 may be understood as a valve box.

The modular design of the fluid reactor device 100 allows to attach and detach the housing parts 171 and 172 from each other as needed. Accordingly, various tasks such as installation and maintenance of the fluid reactor device 100 may be facilitated. For example, for installation of the fluid reactor device 100, the housing parts 171 and 172 may be provided separately and be attached to each other (e.g., after moving the housing parts 171 and 172 into a relative position that allows attachment of the housing parts 171 and 172 to each other). For maintenance of a component such as the fluid distribution system 160, the first plenum 120 or the second plenum 130, the housing parts 171 and 172 may simply be detached from each other such that the respective inside of the housing parts 171 and 172 is accessible by a service technician for maintenance. For example, the maintenance work may comprise exchanging, installing, uninstalling, upgrading and/or purifying (cleaning) one or more components in at least one of the housing parts 171 and 172. Furthermore, by moving the housing parts 171 and 172 away from each other, a workspace for the service technician may be created (provided).

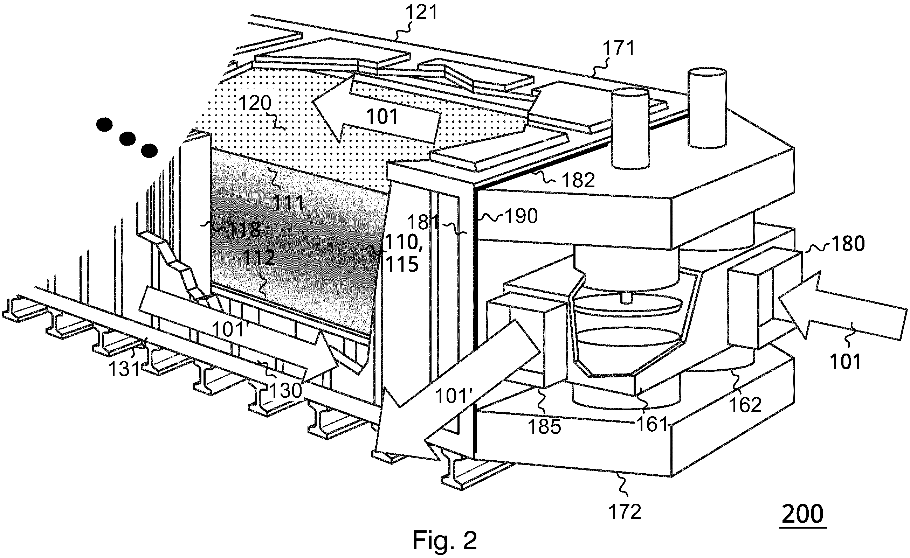

Another fluid reactor device 200, which is based on the fluid reactor device 100 described above, is illustrated in **Fig. 2.** Fig. 2 illustrates a perspective view of the fluid reactor device 200 highlighting the interface 190 between the housing parts 171 and 172, at which the coupling sections of the housing parts 171 and 172 interface (couple). As can be seen from Fig. 2, the fluid distribution system 160 of the fluid reactor device 200 comprises two valves 161, 162 for providing the above described functionality. In the following, only the differences between the fluid reactor devices 100 and 200 will be described.

Furthermore, the second housing part 172 comprises an outlet 185 for releasing the reacted fluid 101'. The outlet 185 allows to release the reacted fluid 101 from the heat-transfer bed 110 to, e.g., the environment (e.g., via a coupled chimney) or to another processing device for the reacted fluid 101'. The fluid distribution system 160 is configured to fluidly couple the outlet 185 to the one of the first plenum 120 and the second plenum 120 which is currently not fluidly coupled to the inlet 180. That is, during a time period in which the second plenum 130 is configured to supply the fluid 101 to the heat-transfer bed 110, the fluid distribution system 160 is configured to fluidly couple the outlet 185 to the first plenum 120. Analogously, during a time period in which the first plenum 120is configured to supply the fluid 101 to the heat-transfer bed 110, the fluid distribution system 160 is configured to fluidly couple the outlet 185 to the second plenum 130.

It is to be noted that - although not explicitly illustrated in Fig. 1 and Fig. 3 to Fig. 7 - also the second housing part 172 illustrated in the respective figure may comprise an outlet analogously to what is described above for the outlet 185 illustrated in Fig. 2.

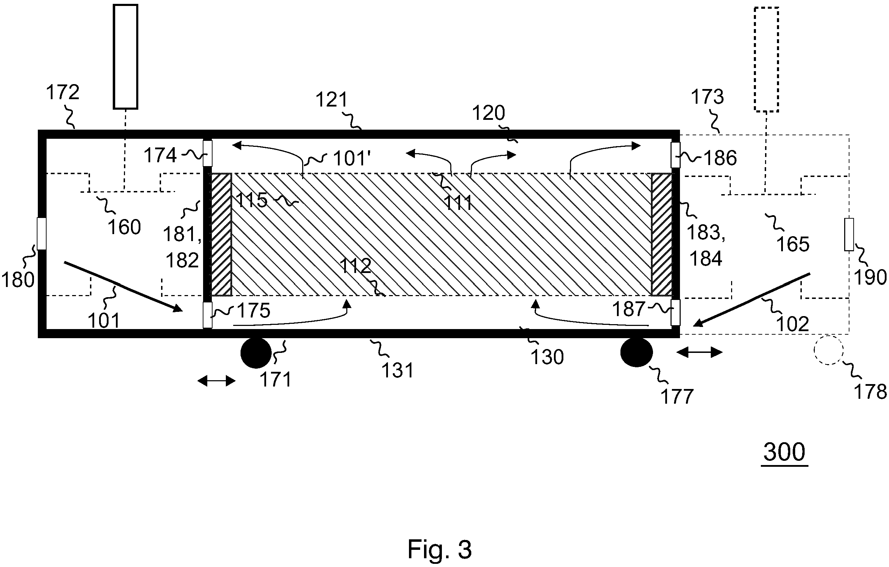

It is to be noted that a fluid reactor device according to the present disclosure may comprise more than two housing parts. An exemplary fluid reactor device 300 comprising three housing parts 171, 172 and 173 is illustrated in **Fig. 3****.** The three housing parts 171, 172 and 173 form the housing of the fluid reactor device 300. The fluid reactor device 300 is based on the fluid reactor device 100. Unlike in the fluid reactor device 100, the second housing part 172 is stationary and does not comprise wheels. On the other hand, the first housing part 171 is movable and comprises wheels 177 in the example of Fig. 3. Therefore, also in the example of Fig. 3, the first housing part 171 and the second housing part 172 are movable relative to each other when detached from each other.

Compared to the fluid reactor device 100, the fluid reactor device 300 additionally comprises the third housing part 173. The third housing part 173 and the second housing part 172 are arranged at opposite ends of the first housing part 171. Like the first housing part 171 and the second housing part 172, the first housing part 171 and the third housing part 173 are detachably attached to each other. Also the third housing part 173 is movable and comprises wheels 178. Therefore, the first housing part 171 and the third housing part 173 are movable relative to each other when detached from each other.

The first housing part 171 comprises a second coupling section 183 for coupling with a coupling section 184 of the third housing part 173. As described above for the coupling sections 181 and 182 for coupling the housing parts 171 and 172, the coupling sections 183 and 184 are dedicated sections of the housing parts 171 and 173 that interface with each other when the first housing part 171 and the third housing part 173 are attached to each other. The first coupling section 181 and the second coupling section 183 are arranged at opposite ends of the first housing part 171. The coupling sections 183 and 184 may be formed analogously to what is described above for the coupling section 181 and 182. In particular, analogously to what is described above for the sealing structures of the coupling section 181 and 182, at least one of the coupling section 183 and the coupling section 184 may be provided with a respective sealing structure (not illustrated in Fig. 3) for sealing the inside volume of the fluid reactor device 300 against the environment of the fluid reactor device 300 when the first housing part 171 and the third housing part 173 are attached to each other.

The third housing part 173 comprises a second inlet 190 configured to receive a second fluid 102. For example, the second inlet 190 may be fluidly coupled to a source providing/emitting the second fluid 102 (e.g., a device such as a machine or a production facility emitting the second fluid 102). The second fluid 102 may be different from the fluid 101. That is, the second fluid 102 may differ from the fluid 101 by at least one of the following properties: composition of the fluid (components contained in the fluid), component concentrations in the fluid, phase of one or more components of the fluid, temperature of the fluid, pressure of the fluid, volume flow of the fluid, etc. In other examples, the second fluid 102 may be identical (equal) to the fluid 101.

Furthermore, the third housing part 173 comprises a second fluid distribution system 165 configured to fluidly couple the second inlet 190 either to the first plenum 120 or the second plenum 130. Recesses 186 are provided in the coupling sections 183 and 184 such that the first plenum 120 is fluidly coupled to the second fluid distribution system 165 when the housing parts 171 and 173 are attached to each other. Furthermore, recesses 187 are provided in the coupling sections 183 and 184 such that the second plenum 130 is fluidly coupled to the second fluid distribution system 165 when the housing parts 171 and 173 are attached to each other. The third housing part 173 allows to concurrently provide the second fluid 102 to the heat-transfer bed 110. For example, the fluid distribution system 160 and the second fluid distribution system 165 may be configured to concurrently and fluidly couple both of the first inlet 180 and the second inlet 190 either to the first plenum 120 or the second plenum 130. In other words, the first and the second fluid distribution system 160, 165 may allow to couple one of the first and the second plenum 120, 130 at a time to the first and the second inlet 190. Accordingly, the first and the second fluid distribution system 160, 165 may allow to selectively supply the fluid 101 and the second fluid 102 to the heat-transfer bed via one of the first and the second plenum 120, 130.

By providing separate inlets 165 and 165 for the fluid 101 and the second fluid 102 and by providing the fluid 101 and the second fluid 102 separately to the heat-transfer bed 110, mixing of the first and the second fluid 101, 102 upstream of the fluid reactor device 300 may be avoided. Accordingly, negative effects (e.g., damages) caused by the upstream mixing of the first and the second fluid 101, 102 may be substantially avoided. In other words, reaction processing of two fluids which do not tolerate each other well is enabled by the fluid reactor device 100. On the other hand, in case the fluid 101 and the second fluid 102 are identical, an increased input capacity for the fluid may be provided compared to convention systems providing only a single inlet. Accordingly, a pressure bottleneck at the input may be avoided.

Analogously to what is described above for the detachable attachment of the second housing part 172 to the first housing part 171, the modular design of the fluid reactor device 300 allows to attach and detach the various housing parts 171, 172 and 173 from each other as needed. Accordingly, various tasks such as installation and maintenance of the fluid reactor device 300 may be facilitated. Therefore, efforts for installation and maintenance may be significantly reduced compared to conventional systems.

During time periods in which the third housing part 173 is not attached to the first housing part 171, one or more cover (not illustrated in Fig. 3) may be detachably attached to the second coupling section 183 to cover the recesses 186 and 187 in the second coupling section 183. For examples, during times, where the first housing part 171 is only coupled with the second housing part 172, but not with the third housing part 173, the recesses 186 and 187 formed in the second coupling section 183 may be covered in order to avoid release of the fluid 101 into the environment, uncontrolled entry of gases or liquids from the environment into the fluid reactor device 300, heat loses, etc. When the third housing part 173 is to be coupled to the second coupling section 183, the one or more cover may simply be removed.

It is to be noted that - although not explicitly illustrated in Fig. 3 - also the third housing part 173 illustrated in Fig. 3 may comprise an outlet analogously to what is described above for the outlet 185 illustrated in Fig. 2. Alternatively or additionally, the third housing part 173 may comprise a second outlet for releasing the reacted fluid 101' (not illustrated in Fig. 3). The second fluid distribution system 165 may accordingly be configured to fluidly couple the second outlet to the one of the first plenum 120 and the second plenum 130 which is not fluidly coupled to the second inlet 190.

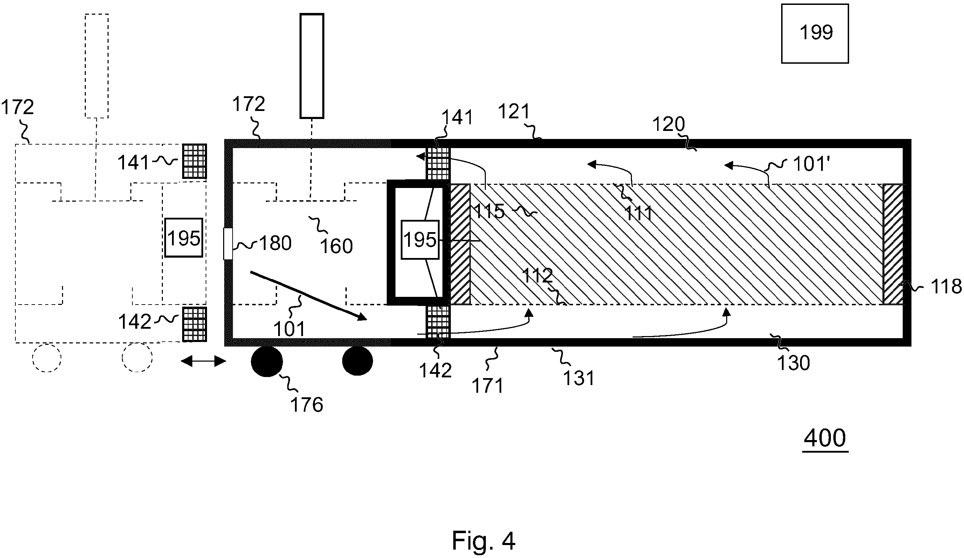

**Fig. 4** illustrates another fluid reactor device 400, which is based on the fluid reactor device 100 described above. In the following, only the differences between the fluid reactor devices 100 and 400 will be described.

Compared to the fluid reactor device 100, the fluid reactor device 400 additionally comprises contact structures 141 and 142 for (pre-heating) the fluid 101 being supplied to the heat-transfer bed 110 to a second predetermined temperature. The second predetermined temperature may, e.g., be above the highest dew point of the fluid 101's components such that the fluid 101's components do not condense out of the gaseous phase. In other examples, the second predetermined temperature may, e.g., be at least (well) above the highest dew point of the fluid's components being critical for corrosive wear or the like. The second predetermined temperature may be higher or lower than the first predetermined temperature to which the heat storage material 115 is heated by the electrical heater embedded in the heat storage material 115.

The first contact structure (element, material, device, means) 141 for contacting the fluid 101 is arranged in the second housing part 172, in particular in the fluid distribution system 160. The first contact structure 141 is configured to heat the fluid 101 to the second predetermined temperature before it reaches the first plenum 120 during the time period in which the first plenum 120 is configured to supply the fluid 101 to the heat-transfer bed 110. The second contact structure (element, material, device, means) 142 for contacting the fluid 101 is analogously arranged in the second housing part 172, in particular in the fluid distribution system 160. The second contact structure 142 is configured to heat the fluid 101 to the second predetermined temperature before it reaches the second plenum 130 during the time period in which the second plenum 130 is configured to supply the fluid 101 to the heat-transfer bed 110 as illustrated in Fig. 4.

By (pre-)heating the fluid 101 to the second predetermined temperature before the fluid 101 reaches the respective plenum 120, 130, various effects such as pollution of fluid flow paths within the fluid reactor device 400, blocking of reaction surfaces within the fluid reactor device 400 and corrosive wear of components of the fluid reactor device 400 may be avoided. As corrosive wear may be avoided by heating the fluid 101 to the second predetermined temperature, components of the fluid reactor device 400 which might come into contact with the fluid 101 need not be corrosion resistant. As these components need not be corrosion resistant, less expensive materials may be used compared to conventional systems. Furthermore, as pollution of fluid flow paths and blocking of reaction surfaces may be avoided by heating the fluid 101 to the second predetermined temperature, no time-consuming countermeasures are required. Accordingly, downtimes of the fluid reactor device 400 may be reduced compared to conventional systems.

The first contact structure 141 is configured to controllably transfer heat to the fluid 101 while the fluid 101 passes the first contact structure 141 on its way toward the heat-transfer bed 110. Analogously, the second contact structure 142 is configured to controllably transfer heat to the fluid 101 while the fluid 101 passes the second contact structure 142 on its way toward the heat-transfer bed 110. The first and second contract structures 141 and 142 may generally exhibit any shape that allows to contact the fluid 101. For example, the first and second contact structures 141 and 142 may each, e.g., be or comprise one or more of a contact surface (planar or non-planar) and a contact grid.

For example, the first contact structure 141 and/or the second contact structure 142 may be configured to heat the fluid 101 using heat from the heat-transfer bed 110 and/or the heat storage material 115. In particular, the first contact structure 141 and/or the second contact structure 142 may be configured to heat the fluid 101 being supplied to the heat-transfer bed 110 using heat from the inner zone or area of the heat-transfer bed 110. For example, the fluid reactor device 400 may comprise at least one of a heat exchanger, a heat pipe, a heat conductor (e.g., a thermal oil circuitry) and a heat pump configured to controllably transfer heat from the heat-transfer bed 110 and/or the heat storage material 115 (e.g., the inner zone or area) to the to the respective contact structure 141, 142. In the example of Fig. 4, the heat exchanger, heat pipe, heat conductor and/or heat pump is/are schematically illustrated and denoted by reference numeral 195. The heat exchanger, heat pipe, heat conductor and/or heat pump 195 is/are thermally coupled to the heat-transfer bed 110 and/or the heat storage material 115 and each of the first contact structure 141 and the second contact structure 142 in order to controllably transfer heat from the heat storage material 115 to the fluid 101 via the first contact structure 141 and the second contact structure 142. The heat exchanger may, e.g., be one of a gas-gas heat exchanger (such as a tube based gas-gas heat exchanger) and a gas-fluid-gas heat exchanger (such as a tube based gas-fluid-gas heat exchanger).

When the fluid 101 reacts while flowing through the heat storage material 115, excess heat is generated and stored by the heat storage material 115 (i.e., in the heat-transfer bed 110). In particular, heat may be generated and stored in the inner zone or area or the heat-transfer bed 110. Using the excess heat stored by the heat-transfer bed 110 and/or the heat storage material 115 may allow to at least reduce the amount of heat or energy from external sources required for heating the fluid 101 being supplied to the heat-transfer bed 110. In some examples, no heat or energy from external sources may be required for heating the fluid 101 being supplied to the heat-transfer bed 110. In other words, the first contact structure 141 and/or the second contact structure 142 may be configured to heat the fluid 101 being supplied to the heat-transfer bed 110 using exclusively (only) heat from the heat-transfer bed 110 and/or the heat storage material 115. Using heat from the heat-transfer bed 110 and/or the heat storage material 115 for heating the fluid 101 being supplied to the heat-transfer bed 110 may allow to increase an energy efficiency of the fluid reactor device 400 and, hence, allow to reduce an energy consumption of the fluid reactor device 400.

In some examples, the first contact structure 141 and/or the second contact structure 142 may be based on regenerative heating approaches using heat recovered from the reacted fluid 101', which is drained from the heat-transfer bed 110, for heating the fluid 101 being supplied to the heat-transfer bed 110. In other words, the first contact structure 141 and/or the second contact structure 142 may use regenerative heat recovery and transfer from the reacted fluid 101' to the fluid 101 being supplied to the heat-transfer bed 110. According to examples, the first contact structure 141 and/or the second contact structure 142 may additionally or alternatively be configured to heat the fluid 101 being supplied to the heat-transfer bed 110 using heat recovered from the reacted fluid 101' previously drained from the heat-transfer bed 110. For example, at least one of the first contact structure 141 and the second contact structure 142 may additionally or alternatively be configured to heat the fluid 101 using heat recovered from the reacted fluid 101' previously drained from the heat-transfer bed 110 via the respective plenum. The reacted fluid 101' is still hot when it is drained form the heat-transfer bed 110. Recovering and using the heat of the reacted fluid 101' for subsequently heating the fluid 101 may allow to further increase the efficiency of the fluid reactor device 100' and at the same time reduce the risk of condensations inside the first plenum 120 and the second plenum 130 due to an increased temperature level of the incoming fluid 101. During the time period in which the first plenum 120 is configured to supply the fluid 101 to the heat-transfer bed 110, the first contact structure 141 may, e.g., be configured to heat the fluid 101 being supplied to the heat-transfer bed 110 using heat recovered from the reacted fluid 101' which was drained from the heat-transfer bed 110 via the first plenum 120 during the previous (e.g., the immediately preceding) time period in which the second plenum 130 was configured to supply the fluid 101 to the heat-transfer bed 110. Analogously, during the time period in which the second plenum 130 is configured to supply the fluid 101 to the heat-transfer bed 110, the second contact structure 142 may be configured to heat the fluid 101 being supplied to the heat-transfer bed 110 using heat recovered from the reacted fluid 101' which was drained from the heat-transfer bed 110 via the second plenum 130 during the previous (e.g., the immediately preceding) time period in which the first plenum 120 was configured to supply the fluid 101 to the heat-transfer bed 110. Accordingly, the first contact structure 141 and/or the second contact structure 142 may comprise or at least partly be made of heat storage material (e.g., with similar or identical thermal properties as the heat storage material 115 described above). For example, the first contact structure 141 and/or the second contact structure 142 may be or comprise one or more (e.g. ceramic) honeycomb block of heat storage material.

Alternatively or additionally, the first contact structure 141 and/or the second contact structure 142 may be configured to heat the fluid 101 being supplied to the heat-transfer bed 110 using heat recovered from the reacted fluid 101' being concurrently (at the same time, in parallel) drained from the heat-transfer bed 110. During the time period in which the first plenum 120 is configured to supply the fluid 101 to the heat-transfer bed 110, the first contact structure 141 may, e.g., be configured to heat the fluid 101 being supplied to the heat-transfer bed 110 using heat recovered from the reacted fluid 101' which is concurrently drained from the heat-transfer bed 110 via the second plenum 130. Analogously, during the time period in which the second plenum 130 is configured to supply the fluid 101 to the heat-transfer bed 110, the second contact structure 142 may be configured to heat the fluid 101 being supplied to the heat-transfer bed 110 using heat recovered from the reacted fluid 101' which is concurrently drained from the heat-transfer bed 110 via the first plenum 120. For example, the respective contact structure 141, 142 or any other heat-storage material (e.g., with similar or identical thermal properties as the heat storage material 115 described above) in the respective one of the first plenum 120 and the second plenum 130 may be configured to recover heat from the reacted fluid 101'. The at least one of the heat exchanger, the heat pipe, the heat conductor and the heat pump 195 may selectively supply heat recovered from the reacted fluid 101' in one of the first plenum 120 and the second plenum 130 to the respective contact structure 141, 142 in the other one of the first plenum 120 and the second plenum 130 (e.g., depending on which one of the first plenum 120 and the second plenum 130 is configured to supply the fluid 101 to the heat-transfer bed 110). Using heat recovered from the reacted fluid 101' for heating the fluid 101 being supplied to the heat-transfer bed 110 may allow to increase an energy efficiency of the fluid reactor device 400 and, hence, allow to reduce an energy consumption of the fluid reactor device 400.

Regarding the placement of the schematically illustrated heat exchanger, heat pipe, heat conductor and/or heat pump 195 in Fig. 4, it is to be noted that the placement of this element in the second housing part 172 is chosen for illustrative purposes only. The heat exchanger, heat pipe, heat conductor and/or heat pump 195 may at least in part be arranged in the heat-transfer bed 110 and be thermally coupled to the first and second contact structures 141 and 142. This is illustrated in Fig. 4 by the connections of the heat exchanger, heat pipe, heat conductor and/or heat pump 195 to the heat-transfer bed 110 and the first and second contact structures 141 and 142. Accordingly, the heat exchanger, heat pipe, heat conductor and/or heat pump 144 may be configured to selectively and controllably transfer heat from the heat storage material 115 to the first and second contact structures 141 and 142.

The fluid reactor device 400 may optionally further comprise control circuitry 199 configured to control the heat transfer to the first and second contact structures 141 and 142. The control circuitry 199 is coupled to the heat exchanger, heat pipe, heat conductor and/or heat pump 195. For example, the control circuitry 199 may be a single dedicated processor, a single shared processor, or a plurality of individual processors, some of which or all of which may be shared, a digital signal processor (DSP) hardware, an application specific integrated circuit (ASIC), or a field programmable gate array (FPGA). The one or more control circuitry may optionally be coupled to, e.g., read only memory (ROM) for storing software (e.g., storing a program for controlling the respective at least one actuator), random access memory (RAM) and/or non-volatile memory. The control circuitry 199 may be provided (e.g., exclusively) in the first housing part 171, (e.g., exclusively) in the second housing part 172 or as distributed circuitry in both housing parts 171 and 172. For illustrative purposes only, the control circuitry 199 is illustrated outside the housing parts 171 and 172 in Fig. 4

The control circuitry 199 may be configured to control the at least one of the heat exchanger, the heat pipe, the heat conductor and the heat pump 195 to selectively supply heat from the heat-transfer bed 110 to the respective contact structure 141, 142 depending on which one of the first plenum 120 and the second plenum 130 is configured to supply the fluid 101 to the heat-transfer bed 110. Alternatively or additionally, the control circuitry 199 may be configured to control the at least one of the heat exchanger, the heat pipe, the heat conductor and the heat pump 195 to selectively supply heat recovered from the reacted fluid 101' in one of the first plenum 120 and the second plenum 130 to the respective contact structure 141, 142 depending on which one of the first plenum 120 and the second plenum 130 is configured to supply the fluid 101 to the heat-transfer bed 110.

The control circuitry 199 may control the amount of heat transferred by the respective contact structure 141, 142 to the fluid 101 based on various parameters. For example, the control circuitry 199 may be configured to control the amount of heat transferred by the respective contact structure 141, 142 to the fluid 101 based on a composition of the fluid 101, a temperature of the fluid 101 before heating (i.e., before passing the respective contact structure 141, 142), a temperature of the fluid 101 after heating (i.e., after passing the respective contact structure 141, 142) and/or a volume flow rate of the fluid 101. The composition of the fluid 101 is indicative of the highest dew point of the fluid 101's components and may, hence, be used to set the second predefined temperature to which the fluid 101 is heated by the respective contact structure 141, 142. The temperature of the fluid 101 before passing the respective contact structure 141, 142 allows to determine the temperature increase required to reach the second predefined temperature. The temperature of the fluid 101 after passing the respective contact structure 141, 142 indicates whether the fluid 101 is heated sufficiently or too much by the respective contact structure 141, 142. The volume flow rate of the fluid 101 influences the amount of heat required for sufficiently heating the fluid 101 to the second predefined temperature (e.g., the higher the volume flow rate of the fluid 101 is, the more heat is required for heating). The fluid reactor device 400 or the control circuitry 199 may comprise one or more interface (not illustrated in Fig. 4) configured to receive data and/or one or more input signal indicating one or more of the above parameters. Alternatively or additionally, the fluid reactor device 400 may comprise one or more sensor for measuring one or more of the above parameters (not illustrated in Fig. 4).

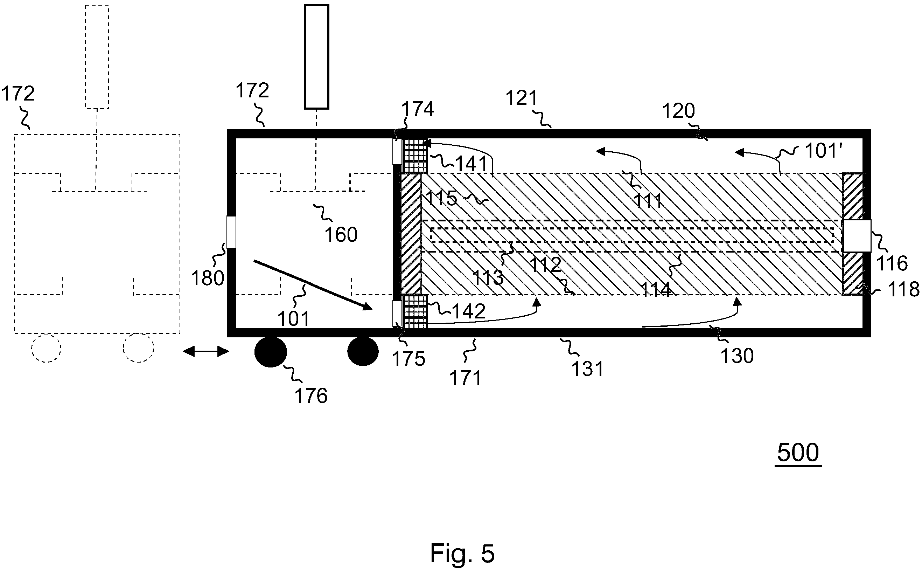

It is to be noted that the contact structures 141 and 142 need not be placed in the second housing part 172. In particular, the contact structures 141 and 142 need not be arranged in the fluid distribution system 160. **Fig. 5** illustrates another fluid reactor device 500 in which the first contact structure 141 is arranged in the first plenum 120, and the second contact structure 142 is arranged in the second plenum 130. In other words, the contact structures 141 and 142 are arranged in the first housing part 171 in the example of Fig. 5.

Analogously to what is described above, the first contact structure 141 is configured to controllably transfer heat to the fluid 101 while the fluid 101 passes the first contact structure 141 on its way toward the heat-transfer bed 110. The second contact structure 142 is configured to controllably transfer heat to the fluid 101 while the fluid 101 passes the second contact structure 142 on its way toward the heat-transfer bed 110.

For illustrative purposes only, the at least one of the heat exchanger, the heat pipe, the heat conductor and the heat pump 195 as well as the control circuitry 199 are not illustrated in Fig. 5.

The fluid reactor device 500 allows to achieve the same beneficial effects as the fluid reactor device 400 described above.

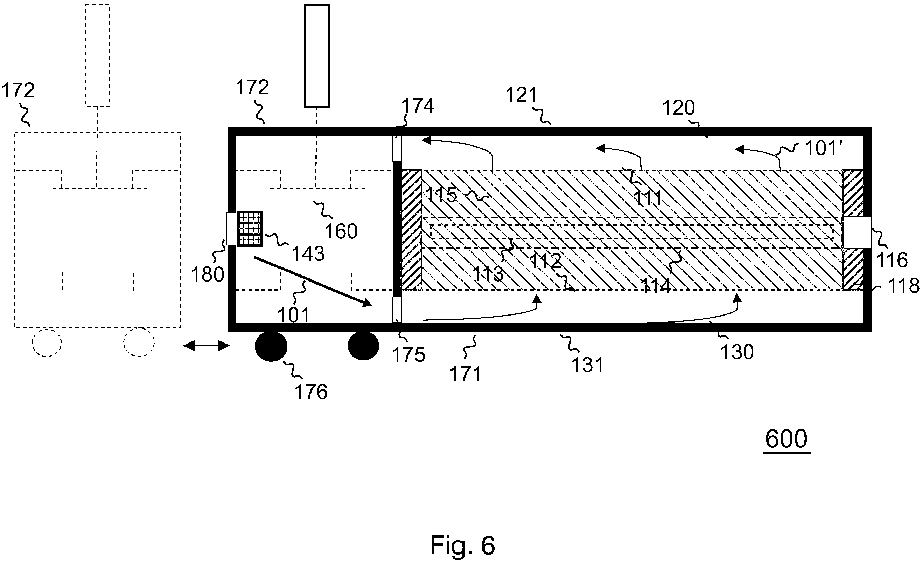

Furthermore, it is to be noted that less than two contact structures may be used for (pre-heating the fluid 101 before it reaches the heat-transfer bed 110. Fig. 6 illustrates a corresponding fluid reactor device 600 in which a single contact structure 143 is arranged in the fluid distribution system 160 near the inlet 180. Accordingly the fluid 101 may be heated to the second predetermined temperature before it is diverted to either the first plenum 120 or the second plenum 130 by the fluid distribution system 160.

For illustrative purposes only, the at least one of the heat exchanger, the heat pipe, the heat conductor and the heat pump 195 as well as the control circuitry 199 are not illustrated in Fig. 6.

The fluid reactor device 600 allows to achieve the same beneficial effects as the fluid reactor device 400 described above.

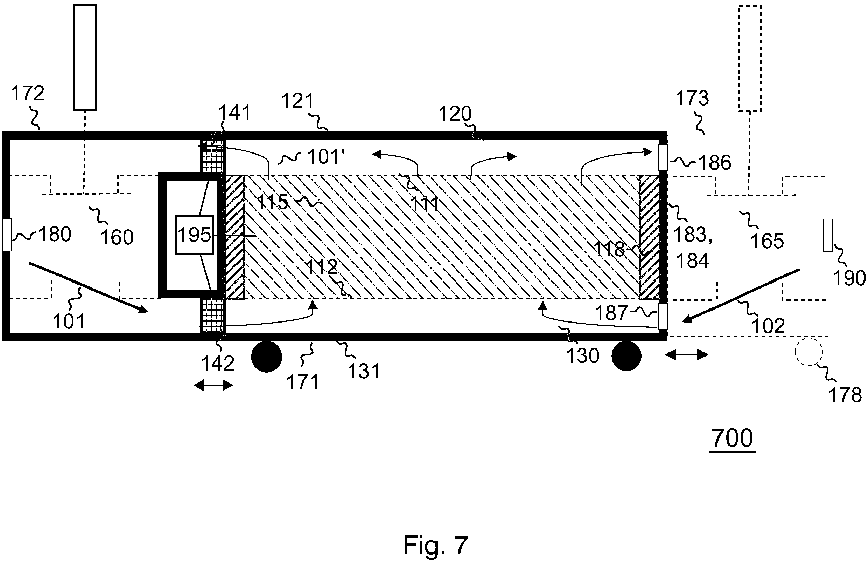

Fluid reactor devices with (pre-)heating of the fluid 101 being supplied to the heat-transfer bed may comprise more than two housing parts. An exemplary fluid reactor device 700 comprising three housing parts 171, 172 and 173 is illustrated in **Fig. 7****.** The fluid reactor device 700 is based on the fluid reactor device 400 described above and additionally comprises the third housing part 173. The attachment of the third housing part 173 to the first housing part 171 is analogous to what is described above with respect to Fig. 3 for the fluid reactor device 300.

Although not explicitly illustrated in Fig. 7, one or more additional contact structure may optionally be arranged in the second fluid distribution system 165 and be configured to heat the second fluid 102 before it reaches the respective one of the first plenum 120 and the second plenum 130 analogously to what is described above with respect to Fig. 4 and Fig. 6. Alternatively, one or more additional contact structure may optionally be arranged in the first plenum 120 and/or the second plenum 130 and be configured to heat the second fluid 102 before it reaches the heat-transfer bed 110 analogously to what is described above with respect to Fig. 5. By (pre-)heating the second fluid 102 to the second predetermined temperature before the fluid 102 reaches heat-transfer bed 110, various effects such as pollution of fluid flow paths within the fluid reactor device 700, blocking of reaction surfaces within the fluid reactor device 700 and corrosive wear of components of the fluid reactor device 700 may be avoided.

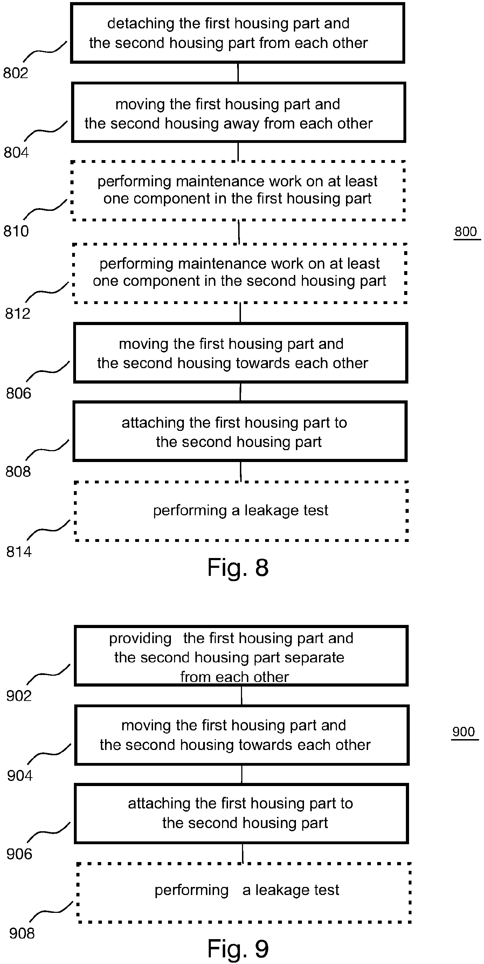

For further illustrating the proposed architecture for fluid reaction processing, **Fig. 8** illustrates a flowchart of a method 800 for maintaining a fluid reactor device as described herein. The method 800 comprises detaching 802 the first housing part and the second housing part from each other. Additionally, the method 800 comprises moving 804 the first housing part and the second housing part away from each (i.e., at least one of the first housing part and the second housing part is moved away from the other) after detaching to enable access to the inside of at least one of the first housing part and the second housing part for maintenance. The method 800 further comprises moving 806 the first housing part and the second housing part towards each other (i.e., at least one of the first housing part and the second housing part is moved towards the other) after maintenance. In addition, the method 800 comprises attaching 808 the first housing part to the second housing part after the first housing part and the second housing part are moved towards each other.

Similar to what is described above, the method 800 allows to separate the housing parts of the modular fluid reactor device for maintenance such that the respective inside of the housing parts is accessible by a service technician. Furthermore, by moving the housing parts away from each other, a workspace is obtained for the service technician. Accordingly, the service technician can easily access objects within the respective housing part and perform required or desired maintenance work.

More details and aspects of the method 800 are explained in connection with the proposed technique or one or more example described above (e.g., Figs. 1 to 7). The method 800 may comprise one or more additional optional feature corresponding to one or more aspect of the proposed technique, or one or more example described above. For example, the method 800 may additionally comprise performing 810 maintenance work on at least one component in the first housing part. Additionally or alternatively, the method 800 may comprise performing 812 maintenance work on at least one component in the second housing part. As described above, the maintenance work may be manifold. For example, the maintenance work may comprise exchanging, installing, uninstalling, upgrading and/or purifying (cleaning) one or more components in at least one of the housing parts.

The method 900 may further comprise performing 814 a leakage test (sealing test, tightness test) after attaching the first housing part to the second housing part. The leakage test allows to test whether the interface between the first housing part and the second housing part is fluid-tight. Performing 814 the leakage test may, e.g., comprise injecting a pressurized test fluid to the interior of the fluid reactor device (e.g., via a respective test fluid port in at least one of the first housing part, the second housing and the third housing part as described above) and measuring whether the test fluid leaks from the interface between the first housing part and the second housing part. Analogously, performing 814 the leakage test may comprise measuring whether the test fluid leaks from the interface between the first housing part and the third housing part. It is to be noted that the injection of the pressurized test fluid to the interior of the fluid reactor device further allows to test the fluid-tightness of the other components (e.g., the housing) of the fluid reactor device. For example, the pressurized test fluid may be a pressurized gas such as pressurized air.

**Fig. 9** further illustrates a flowchart of a method 900 for installing a fluid reactor device as described herein. The method 900 comprises providing 902 the first housing part and the second housing part separate from each other. Additionally, the method 900 comprises moving 904 the first housing part and the second housing part towards each other (i.e., at least one of the first housing part and the second housing part is moved towards the other). The method 900 further comprises attaching 906 the first housing part to the second housing part after the first housing part and the second housing part are moved towards each other.

Similar to what is described above, the method 900 allows facilitated installation of the fluid reactor device. As the fluid reactor device is modular, the individual housing parts may be shipped separately from a manufacturer or vendor to an installation location. As the individual housing parts are smaller than the overall fluid reactor device, shipping is facilitated. Furthermore, handling is facilitated due to the smaller individual housing parts. The separate housing parts only need to be moved towards each other into a relative position that allows attachment of the housing parts to each other. Subsequently they can be attached to each other. Furthermore, before the first housing part and the second housing part are moved towards each other, a service technician easily access objects within the respective housing part and perform required or desired installation work.

More details and aspects of the method 900 are explained in connection with the proposed technique or one or more example described above (e.g., Figs. 1 to 7). The method 900 may comprise one or more additional optional feature corresponding to one or more aspect of the proposed technique, or one or more example described above. For example, the method 900 may further comprise performing 908 a leakage test (sealing test, tightness test) after attaching the first housing part to the second housing part. The leakage test allows to test whether the interface between the first housing part and the second housing part is fluid-tight. Performing 908 the leakage test may, e.g., comprise injecting a pressurized test fluid to the interior of the fluid reactor device (e.g., via a respective test fluid port in at least one of the first housing part, the second housing and the third housing part as described above) and measuring whether the test fluid leaks from the interface between the first housing part and the second housing part. Analogously, performing 908 the leakage test may comprise measuring whether the test fluid leaks from the interface between the first housing part and the third housing part. It is to be noted that the injection of the pressurized test fluid to the interior of the fluid reactor device further allows to test the fluid-tightness of the other components (e.g., the housing) of the fluid reactor device. For example, the pressurized test fluid may be a pressurized gas such as pressurized air.

The aspects and features described in relation to a particular one of the previous examples may also be combined with one or more of the further examples to replace an identical or similar feature of that further example or to additionally introduce the features into the further example.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A fluid reactor device (100), in particular a fluid purification device, comprising:
a first housing part (171) comprising:
a heat-transfer bed (110) comprising heat storage material (115);
a first plenum (120) fluidly coupled to a first opening (111) of the heat-transfer bed (110); and
a second plenum (130) fluidly coupled to a second opening (112) of the heat-transfer bed (110); and
a second housing part (172) comprising:
an inlet (180) configured to receive fluid (101); and
a fluid distribution system (160) configured to fluidly couple the inlet (180) either to the first plenum (120) or the second plenum (130),
wherein the first housing part (171) and the second housing part (172) are detachably attached to each other.

2. The fluid reactor device (100) of claim 1, wherein, when detached from each other, the first housing part (171) and the second housing part (172) are movable relative to each other.

3. The fluid reactor device (100) of claim 2, wherein one of the first housing part (171) and the second housing part (172) is stationary and the other one of the first housing part (171) and the second housing part (172) is movable.

4. The fluid reactor device (100) of claim 2, wherein both the first housing part (171) and the second housing part (172) are movable.

5. The fluid reactor device (100) of any one of claims 2 to 4, wherein at least one of the first housing part (171) and the second housing part (172) is provided with bearings (176, 177) for moving the one of the at least one of the first housing part (171) and the second housing part (172) relative to the ground.

6. The fluid reactor device (100) of any one of claims 1 to 5, wherein the first housing part (171) comprises a first coupling section (181) configured to couple with a coupling section (182) of the second housing part (172) when the first housing part (171) and the second housing part (172) are attached to each other.

7. The fluid reactor device (100) of claim 6, wherein at least one of the first coupling section (181) and the coupling section (182) of the second housing part (172) is provided with a respective sealing structure for sealing an inside volume of the fluid reactor device (100) against an environment of the fluid reactor device (100) when the first housing part (171) and the second housing part (172) are attached to each other.

8. The fluid reactor device (100) of claim 6 or claim 7, wherein the first housing part (171) comprises a second coupling section (183) for coupling with a third housing part (173), wherein the first coupling section (181) and the second coupling section (183) are arranged at opposite ends of the first housing part (171), and wherein one or more cover is detachably attached to the second coupling section (183) to cover one or more recess formed in the third coupling section (183) when the second coupling section (183) is not coupled with the third housing part (173).

9. The fluid reactor device (100) of any one of claims 1 to 7, further comprising:
a third housing part (173) comprising:
a second inlet (190) configured to receive a second fluid (102); and
a second fluid distribution system (165) configured to fluidly couple the second inlet (190) either to the first plenum (120) or the second plenum (130),
wherein the first housing part (171) and the third housing part (173) are detachably attached to each other.

10. The fluid reactor device (100) of claim 9, wherein, when detached from each other, the first housing part (171) and the third housing part (173) are movable relative to each.

11. The fluid reactor device (100) of claim 9 or claim 10, wherein the first housing part (171) comprises a second coupling section (183) configured to be coupled with a contact section (184) of the third housing part (173) when the first housing part (171) and the second housing part (172) are attached to each other.

12. The fluid reactor device (100) of claim 11, wherein at least one of the second coupling section (183) and the coupling section (184) of the third housing part (173) is provided with a respective sealing structure for sealing an inside volume of the fluid reactor device (100) against an environment of the fluid reactor device (100) when the first housing part (171) and the third housing part (173) are attached to each other.

13. The fluid reactor device (100) of any one of claims 1 to 12, further comprising:
a first contact structure (141) for contacting the fluid (101), wherein the first contact structure (141) is arranged in the fluid distribution system (160) and configured to heat the fluid (101) before it reaches the first plenum (120) and/or is arranged in the first plenum (120) and configured to heat the fluid (101) before it reaches the heat-transfer bed (110).

14. The fluid reactor device (100) of claim 13, wherein the first contact structure (141) is configured to heat the fluid (101) using one or more of heat from the heat-transfer bed (110), heat recovered from reacted fluid (101') previously drained from the heat-transfer bed (110) via the first plenum (120), and heat recovered from reacted fluid (101') being concurrently drained from the heat-transfer bed (110) via the second plenum (130).

15. The fluid reactor device (100) of any one of claims 1 to 14, wherein the first plenum (120) and the second plenum (130) are configured to alternatingly supply the fluid (101) to the heat-transfer bed (110) such that the fluid (101) heats up and reacts while flowing through the heat storage material (115), and wherein, during a time period in which one of the first plenum (120) and the second plenum (130) is configured to supply the fluid (101) to the heat-transfer bed (110), the other one of the first plenum (120) and the second plenum (130) is configured to drain the reacted fluid (101') from the heat-transfer bed (110).

16. A method (800) for maintaining a fluid reactor device according to any one of claims 1 to 15, the method comprising:
detaching (802) the first housing part and the second housing part from each other;
moving (804) the first housing part and the second housing part away from each after detaching to enable access to the inside of at least one of the first housing part and the second housing part for maintenance;
moving (806) the first housing part and the second housing part towards each other after maintenance; and
attaching (808) the first housing part to the second housing part after the first housing part and the second housing part are moved towards each other.

17. A method (900) for installing a fluid reactor device according to any one of claims 1 to 15, the method comprising:
providing (902) the first housing part and the second housing part separate from each other;
moving (904) the first housing part and the second housing part towards each other; and
attaching (906) the first housing part to the second housing part after the first housing part and the second housing part are moved towards each other.

18. The method (800, 900) of claim 16 or claim 17, further comprising:
performing (814, 908) a leakage test after attaching the first housing part to the second housing part.
